# FASCICULE DE BREVET EUROPEEN

(11) **EP 0 577 536 B1**
(45) Date de publication et mention de la délivrance du brevet: **07.02.1996**
(21) Numéro de dépôt: 93470016.2
(22) Date de dépôt: 02.07.1993
(51) Int. Cl.: F16F 1/38, B60G 7/02

(54) **Moyen d'assemblage pour liaison essieu-support de chassis pour véhicules, et outil de montage**
Vorrichtung für den Zusammenbau eines Achsträgers für Fahrzeuge und Montagewerkzeug
Assembly means for an axle support of a vehicle axle and mounting tool

(30) Priorité: 03.07.1992 FR 9208410
(43) Date de publication de la demande: 05.01.1994
(73) Titulaire: Mameri, Gaby, F-51300 Huiron (FR)
(72) Inventeur: Mameri, Gaby, F-51300 Huiron (FR)
(74) Mandataire: Poupon, Michel

(56) Documents cités:
- FR-A- 1 256 690
- GB-A- 593 466
- US-A- 2 935 347
- US-A- 5 069 431
- Patent Abstracts of Japan vol. 004,no. 143(M-035)8 Octobre 1980 & JP-A-55 097 945(HITACHI CABLE LTD) 25.Juillet 1980

## Description

La présente invention concerne un moyen d'assemblage pour liaison essieu-support de chassis pour véhicules, ainsi que l'outil de montage correspondant.

Actuellement, un essieu de poids lourds, à air ou à lame comporte au moins un tirant à une de ses extrémités, tirant lié à une fourche du support de chassis au moyen d'un axe creux traversant les deux oreilles de la fourche, et un ensemble amortisseur à SILENTBLOC (marque déposée) et fourrure placé dans un tirant ou une bielle. L'axe creux est bloqué en place à ses deux extrémités par deux écrous ou par un boulon avec écrou qui traverse les axes creux en deux parties.

En raison de son emplacement, ce moyen de liaison est rapidement détérioré par les chocs, la rouille, etc... et sa durée de vie est courte, de l'ordre de trois mois à un an.

Le remplacement de ce moyen de liaison nécessite de couper les pièces, axes ou boulons, au chalumeau, avec risque d'endommager les oreilles de la fourche à cause de la rouille qui fait se souder les parties métalliques en contact.

Pour le remplacement complet des moyens de liaison d'un semi-remorque à trois essieux par exemple, on compte environ vingt quatre heures de main-d'oeuvre auxquelles s'ajoute le coût des pièces neuves.

Un premier but de l'invention est donc de concevoir un nouveau moyen de liaison dont la durée de vie est plus importante.

Un autre but de l'invention est de concevoir un moyen de liaison dont les pièces sont démontables et réutilisables.

Un autre but encore est de concevoir des pièces à montage et démontage plus rapide.

Ces buts sont atteints grâce au moyen de liaison selon l'invention du type comportant un axe d'assemblage traversant un support en forme de fourche, et une pièce élastique montée à force dans un logement d'un tirant de l'essieu et traversée en son centre par l'axe d'assemblage et se caractérisant en ce que :
- d'une part la pièce élastique est en matériau à mémoire de forme avec un perçage central,
- d'autre part l'axe d'assemblage est au moins en deux parties avec deux parties de compression dont le diamètre est supérieur au diamètre interne du perçage central de la pièce élastique prolongées par deux parties coniques tournées l'une vers l'autre dont le diamètre décroît jusqu'à un diamètre au plus égal au diamètre interne du perçage de la pièce élastique.

On comprendra mieux l'invention à l'aide de la description qui suit faite en référence aux figures annexées suivantes :
- **Figure 1** : Vue en coupe d'un ensemble tirant d'essieu-support de chassis assemblé par un moyen de liaison selon l'invention.
- **Figures 2 à 4** : Eléments d'un premier mode de réalisation de l'axe d'assemblage, respectivement un boulon en forme avec filetage, un écrou en forme avec taraudage intérieur, deux rondelles.
- **Figures 5 à 7** : Eléments d'un deuxième mode de réalisation de l'axe d'assemblage, respectivement deux boulons en forme avec taraudage intérieur, un boulon d'assemblage, deux écrous de blocage et deux rondelles.
- **Figures 8 à 10** : Eléments d'un troisième mode de réalisation de l'axe d'assemblage, respectivement deux écrous en forme avec taraudage intérieur, un boulon à épaulements, deux rondelles.
- **Figure 11** : Etape de montage du moyen amortisseur de l'invention dans son tirant au moyen d'un outil de montage.
- **Figure 12** : Etape de montage de l'axe d'assemblage dans l'ensemble tirant-amortisseur.
- **Figure 13** : Vue en coupe longitudinale d'un quatrième mode de réalisation du moyen d'assemblage,
- **Figure 14** : Vue en coupe longitudinale d'un cinquième mode de réalisation du moyen d'assemblage avec support en deux parties.
- **Figure 15** : Vue en coupe transversale du tirant ou de la bielle en deux parties,
- **Figure 16** : Vue en coupe transversale du mode réalisation de la figure 14 montrant une première variante de montage,
- **Figure 17** : Vue en coupe transversale montrant une deuxième variante de montage,
- **Figure 18** : Vue en coupe transversale montrant une troisième variante de montage.

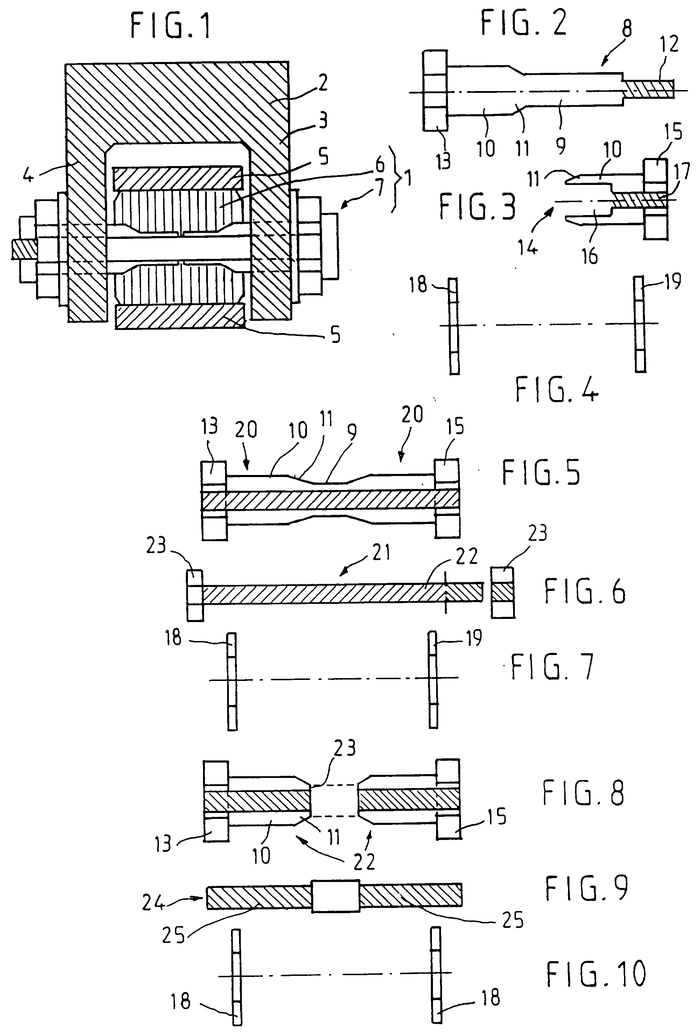

On se reportera d'abord à la figure 1 qui montre l'ensemble des pièces en position de montage.

Un moyen de liaison (1) selon une variante non limitative de l'invention lie entre eux, d'une part un support (2) soudé sous le chassis et comportant deux oreilles (3,4), d'autre part un tirant annulaire (5) allant à l'essieu.

Le moyen de liaison (1) selon l'invention est composé au moins :
- d'un anneau (6) en plastique à mémoire de forme, faisant d'une part amortisseur de vibrations et remplaçant les SILENTBLOC (marque déposée) de l'art antérieur et d'autre part assurant par sa recherche de forme antérieure à la compression, un serrage automatique des pièces et une durée de vie plus longue,
- d'un axe d'assemblage (7) qui peut présenter différentes formes de réalisation dont certaines sont décrites ci-après et dont la fonction consiste à assurer d'une part comme dans l'art antérieur le blocage latéral et d'autre part la compression intérieure de l'anneau (6) à mémoire de forme pour augmenter le serrage.

Selon une première forme de réalisation représentée sur les figures 2 à 4, l'axe d'assemblage comporte :
- un boulon (8) en forme (figure 2) avec une partie cylindrique (9) porteuse à diamètre réduit, une partie cylindrique (10) de compression à diamètre élargi, une partie conique (11) de liaison entre les deux parties cylindriques (10,9), une extrémité avec une tète hexagonale (13) et une extrémité filetée (12),
- une pièce de serrage (14) en forme (figure 3) avec une partie cylindrique (10) à diamètre élargi et une partie conique (11) terminée par un écrou hexagonal (15), un filetage longitudinal (17) recevant l'extrémité filetée du boulon, le filetage (17) débouchant dans un logement cylindrique coaxial recevant la partie cylindrique porteuse (9) du boulon (8),
- deux rondelles de serrage (18,19) (figure 4) sur les oreilles de la fourche.

Selon une deuxième variante de réalisation représentée sur les figures 5 à 7, l'axe d'assemblage (7) comporte :
- deux boulons creux identiques (20) en forme montés symétriquement par rapport à la verticale, et en appui l'un sur l'autre par leur extrémité cylindrique de diamètre réduit (9). Chaque boulon creux (20) présente une partie cylindrique (10) de diamètre élargi reliée à la partie (9) par un cône (11) et se termine par une tête de serrage hexagonale (13 ou 15).
- un boulon d'assemblage (21) (figure 6) formé d'une tige filetée (22) et de deux écrous de serrage (23),
- deux rondelles de serrage (18,19) (figure 7).

Selon une troisième variante de réalisation des figures 8 à 10, l'axe d'assemblage (7) comporte :
- deux boulons creux taraudés identiques (22) (figure 8) en forme qui se différencient des boulons creux (20) par l'absence de partie (9) cylindrique d'appui de diamètre réduit et par la présence d'un épaulement (23) annulaire,
- un boulon d'assemblage (24) (figure 9) avec deux filetages d'extrémités (25) et une partie centrale cylindrique de diamètre identique à celui de la partie (9) précédente s'appuyant latéralement sur les épaulements (23) des deux boulons creux (22),
- deux rondelles de serrage (18,19) (figure 10).

Pour toutes les variantes ci-dessus, l'axe d'assemblage comporte deux parties principales, chacune comportant une partie conique (11) facilitant l'entrée de la partie élargie (10) dans l'anneau à mémoire de forme (6). De plus, l'une des deux parties au moins est traversée longitudinalement par un filetage d'assemblage.

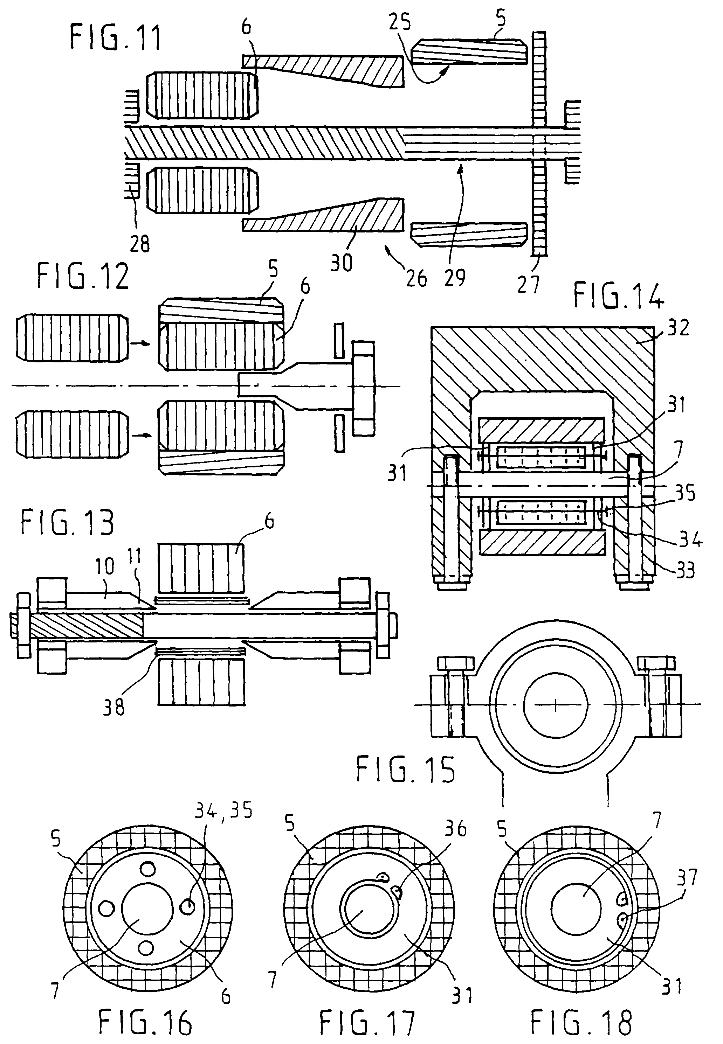

Le montage du moyen de liaison (1) commence par l'étape de mise en place de l'anneau (6) dans son logement (25) prévu dans le tirant (5) (figure 11).

Le diamètre du logement (25) est inférieur au diamètre extérieur de l'anneau (6) comme le montre la figure 10.

L'outil (26) de la figure 11 montre une rondelle (27) d'appui ou support sur le tirant ou la bielle, un long boulon fileté (29) placé dans l'axe du logement (25) et une rondelle ou un écrou (28) dont le déplacement le long du filetage du boulon (29) en direction de la rondelle d'appui (27) entraine l'anneau (6) dans un tube conique (30) de l'outil (26) dont l'ouverture a un diamètre suffisant pour l'entrée de l'anneau (6), et dont la sortie a un diamètre inférieur à celui du logement (25). A sa sortie du tube conique (30), l'anneau (6) comprimé est libéré dans le logement (25) où il tend à reprendre sa forme initiale.

L'étape suivante du montage est la mise en place de l'axe d'assemblage à travers les oreilles (3,4) de la fourche et l'anneau (6).

Comme le montre la figure 12, le diamètre de la partie (9) est prévu pour entrer au centre de l'anneau (6) sans le comprimer.

La partie conique (11) est prévue pour faciliter l'entrée de la partie (10) de compression jusqu'à sa mise en place montrée en figure 1.

Le matériau à mémoire a tendance à reprendre sa forme antérieure, d'où un serrage automatique qui permet de supprimer la fourrure de l'art antérieur.

Ensuite on place les rondelles et les tiges filetées et/ou les écrous de serrage décrits ci-dessus.

Par ailleurs, les différentes pièces décrites peuvent présenter des variantes d'exécution, par exemple la pièce élastique à mémoire de forme peut présenter une forme non cylindrique mais adaptée à la configuration de son logement (25) et/ou du tirant ou support ou bielle.

La pièce élastique à mémoire de forme peut être réalisée en plusieurs pièces assemblées ou en une ou plusieurs pièces coupées dans le sens longitudinal ou transversal.

De même la bielle ou le tirant peuvent être en deux parties pour supprimer l'utilisation d'un outil spécifique pour le montage de la pièce élastique, cette variante correspond à la figure 15, ou bien le support peut être en deux parties comme sur les figures 14 et 16 à 18.

Pour les variantes des figures 14 et 16 à 18, la pièce élastique (6) à mémoire se resserre d'une part sur l'axe, d'autre part dans le tirant ou la bielle en tendant à rapprocher vers le centre de la bielle les deux rondelles (31), le support soudé sur le chassis étant constitué de deux pièces (32,33), la pièce supérieure (32) soudée au chassis comportant deux empreintes taraudées pour recevoir les boulons filetés de la pièce inférieure (33) qui enserre l'axe et la pièce élastique à mémoire.

La pièce élastique (6) est enserrée entre deux rondelles (31) maintenues par exemple :
- par plusieurs ensembles (entretoises 34 - boulon de serrage 35) (voir figures 14 et 16),
- par un clips (36) monté sur l'axe, ou un clips (37) monté sur le tirant ou la bielle (figures 17,18),
- par vissage soit de l'axe sur la rondelle, soit de la rondelle sur le tirant ou la bielle,
- par encliquetage d'une rondelle bombée, sous l'impulsion d'une presse, dans une gorge usinée dans l'axe ou dans la bielle (ou tirant).

Une autre variante de l'axe d'assemblage (7) est encore présentée en figure 13 : elle montre deux pièces en forme tournées l'une vers l'autre, chacune avec une partie de compression (10) et une partie conique (11), destinées à déformer une pièce tubulaire (38) déformable montée entre un boulon de serrage et la pièce élastique (6). La pièce tubulaire (38) peut être en matériau déformable ou présenter des fentes longitudinales à l'une et/ou à l'autre des extrémités ou sur toute sa longueur de manière à permettre son écartement sous l'effet du serrage des écrous latéraux d'extrémités.

Les avantages du moyen de liaison selon l'invention sont nombreux, on cite notamment :
- facilité du démontage et du remplacement de l'axe (variante 2 et 3) s'il est rouillé,
- pas de découpe au chalumeau ni de détérioration de la fourche,
- absence de fourrure,
- application possible aussi bien comme pièce de rénovation pour les transporteurs, que comme pièce d'origine pour les constructeurs,
- autres utilisations possibles par exemple comme articulation de lames maîtresses des suspensions arrières ou d'amortisseurs,
- application possible à d'autres domaines comme celui de la machine outil : par exemple aux pieds de fixation dans le sol des tours, fraiseuses ou autres machines,
- montage possible sur tous les types de suspension, la pièce élastique n'étant alors pas forcément creuse, sa forme étant imposée par la forme du logement.

## Revendications

1. Moyen d'assemblage pour liaison essieu-support de chassis de véhicule du type comportant un axe d'assemblage (7) traversant un support (2) en forme de fourche, et une pièce élastique (6) montée à force dans un logement (25) d'un tirant (5) de l'essieu et traversée en son centre par l'axe d'assemblage, caractérisé en ce que :
- d'une part la pièce élastique (6) est en matériau à mémoire de forme avec un perçage central,
- d'autre part l'axe d'assemblage (7) comporte au moins deux pièces principales avec deux parties de compression (10) dont le diamètre est supérieur au diamètre interne du perçage central de la pièce élastique (6) prolongées par deux parties coniques (11) tournées l'une vers l'autre dont le diamètre décroit jusqu'à un diamètre au plus égal au diamètre interne du perçage de la pièce élastique (6).

2. Moyen d'assemblage selon la revendication 1 caractérisé en ce que l'axe d'assemblage (7) comporte au moins :
- un boulon (8) en forme avec une partie cylindrique (9) porteuse à diamètre réduit, une partie cylindrique (10) de compression à diamètre élargi, une partie conique (11) de liaison entre les deux parties cylindriques (10 et 9), une extrémité avec une tête hexagonale (13) et une extrémité filetée (12),
- une pièce de serrage (14) en forme avec une partie cylindrique (10) à diamètre élargi et une partie conique (11) terminée par un écrou hexagonal (15), un filetage longitudinal (17) recevant l'extrémité filetée du boulon, le filetage (17) débouchant dans un logement cylindrique coaxial recevant la partie cylindrique porteuse (9) du boulon (8),
- deux rondelles de serrage (18,19) sur les oreilles de la fourche.

3. Moyen d'assemblage selon la revendication 1, caractérisé en ce que l'axe d'assemblage (7) comporte au moins :
- deux boulons creux identiques (20) en forme montés symétriquement par rapport à la verticale et en appui l'un sur l'autre par leur extrémité cylindrique de diamètre réduit (9), chaque boulon creux (20) présentant une partie cylindrique (10) de diamètre élargi reliée à la partie (9) par un cône (11) et se terminant par une tête de serrage hexagonale (13 ou 15),
- un boulon d'assemblage (21) formé d'une tige filetée (22) et de deux écrous de serrage (23),
- deux rondelles de serrage (18,19).

4. Moyen d'assemblage selon la revendication 1, caractérisé en ce que l'axe d'assemblage (7) comporte au moins :
- deux boulons creux identiques (22) en forme qui se différencient des boulons creux (20) par l'absence de partie (9) cylindrique d'appui de diamètre réduit et par la présence d'un épaulement (23) annulaire,
- un boulon d'assemblage (24) avec deux filetages d'extrémités (25) et une partie centrale cylindrique de diamètre identique à celui de la partie (9) précédente s'appuyant latéralement sur les épaulements (23) des deux boulons creux (22),
- deux rondelles de serrage (18,19).

5. Moyen d'assemblage selon la revendication 1 caractérisé en ce que l'axe d'assemblage (7) comporte au moins deux pièces en forme tournées l'une vers l'autre, chacune avec une partie de compression (10) et une partie conique (11), destinées à déformer une pièce tubulaire (38) déformable montée entre un boulon de serrage et la pièce élastique (6).

6. Moyen d'assemblage selon l'une des revendications précédentes caractérisé en ce que l'une des pièces (tirant, bielle, support) est en deux parties.

7. Moyen d'assemblage selon l'une des revendications précédentes caractérisé en ce que la pièce élastique (6) est enserrée entre deux rondelles (31).

8. Moyen d'assemblage selon l'une des revendications précédentes caractérisé en que ce la pièce élastique est en plusieurs parties.

9. Outil de montage pour la mise en place de la pièce élastique (6) du moyen de liaison selon la revendication principale dans son logement (25) caractérisé en ce qu'il comporte une rondelle (27) d'appui, un long boulon fileté (29) placé dans l'axe du logement (25), une rondelle (28) dont le déplacement le long du filetage du boulon (29) en direction de la rondelle (27) entraine la pièce élastique (6) dans un tube conique (30).

## Patentansprüche

1. Verbindungselement zum Verbinden eines Achsträgers eines Fahrgestells eines Fahrzeugs, welche eine Montageachse (7) aufweist, die durch einen gabelförmigen Halter (2) hindurchführt und die ein elastisches Teil (6) hat, das unter Vorspannung in eine Aufnahme (25) einer Strebe (5) der Achse eingesetzt ist und durch dessen Zentrum die Montageachse führt, dadurch gekennzeichnet daß
einerseits das elastische Teil (6) aus einem Formgedächnismaterial mit einer zentralen Bohrung besteht, und
andererseits die Montageachse (7) aus zumindest zwei Hauptteilen mit zwei Spannbereichen (10) besteht, deren Durchmesser größer ist als der Innendurchmesser der zentralen Bohrung des elastischen Teils (6) und die jeweils durch einen konischen Bereich (11) verlängert sind, welcher auf den anderen konischen Bereich weist und bis zu einem Durchmesser unterhalb des Innendurchmessers der Bohrung des elastischen Teils (6) abnimmt.

2. Verbindungselement nach Anspruch 1, dadurch gekennzeichnet, daß die Montageachse (7) zumindest folgendes aufweist:
eine Schraube (8) mit einem tragenden, zylindrischen Bereich (9) verminderten Durchmessers, einen zylindrischen Bereich (10) zum Spannen mit erweitertem Durchmesser, einem konischen Übergangsbereich (11) zwischen den beiden zylindrischen Bereichen (10 und 9), ein Ende mit einem sechseckigen Kopf (13) und ein Gewindeende (12),
ein Spannteil (14) mit einem von einer Sechskantmutter (15) begrenzten zylindrischen Bereich (10) größeren Durchmessers, einem konischen Bereich (11), ein Längsgewinde (17), welches das Gewindeende des Bolzens aufnimmt, wobei das Gewinde (17) in einer koaxialen, zylindrischen Ausnehmung mündet, welche den zylindrischen, tragenden Bereich (9) der Schraube (8) aufnimmt,
zwei Spannscheiben (18, 19) auf den Seitenflächen der Gabel.

3. Verbindungselement nach Anspruch 1, dadurch gekennzeichnet, daß die Montageachse (7) zumindest folgendes aufweist:
zwei identische Hohlschrauben (20), welche in Bezug auf eine vertikale Achse symmetrisch zueinander montiert sind und die mit ihren jeweiligen, im Durchmesser reduzierten Enden aneinanderliegen, wobei jede Hohlschraube (20) einen zylindrischen, im Durchmesser vergrößerten Bereich (10) hat, der mit dem Bereich (9) durch einen konischen Bereich (11) verbunden ist und die jeweils mit einem sechseckigen Spannkopf (13 oder 15) endet,
eine Befestigungsschraube (21), welche durch eine Gewindestange (22) und zwei Spannmuttern (23) gebildet ist,
zwei Spannscheiben (18, 19).

4. Verbindungselement nach Anspruch 1, dadurch gekennzeichnet, daß die Montageachse (7) zumindest folgendes enthält:
zwei identische Hohlschrauben (22), welche sich von den Hohlschrauben (20) durch das Fehlen des zylindrischen, aneinanderliegenden Bereichs (9) mit vermindertem Durchmesser und durch das Vorhandensein einer ringförmigen Schulter (23) unterscheiden,
einen Befestigungsbolzen (24) mit Gewinde an seinen beiden Enden (25) und einem mittigen, zylindrischen Bereich mit einem Durchmesser, der mit dem des zuvor genannten Bereichs (9) identisch ist und der sich von den Seiten her gegen die Schultern (23) der beiden Hohlschrauben (22) anlegt,
zwei Spannscheiben (18, 19).

5. Verbindungselement nach Anspruch 1, dadurch gekennzeichnet, daß die Montageachse (7) zumindest zwei aufeinandergerichtete Teile hat, wobei jedes einen Spannbereich (10) und einen konischen Bereich (11) aufweist, welcher zum Verformen eines rohrförmigen Teiles (38) bestimmt ist, der verformbar zwischen einer Befestigungsschraube und dem elastischen Teil (6) montiert ist.

6. Verbindungselement nach einem der vorangehenden Ansprüche, dadurch gekennzeichnet, daß eines der Teile (Zugstange, Lenker, Träger) aus zwei Stücken besteht.

7. Verbindungselement nach einem der vorangehenden Ansprüche, dadurch gekennzeichnet, daß das elastische Teil zwischen zwei Scheiben (31) eingeschlossen ist.

8. Verbindungselement nach einem der vorangehenden Ansprüche, dadurch gekennzeichnet, daß das elastische Teil aus mehreren Teilen besteht.

9. Montagewerkzeug zum Einbau des elastischen Teils (6) des Verbindungselementes gemäß dem Hauptanspruch in seine Aufnahme (25), dadurch gekennzeichnet, daß es eine Abstützscheibe (27), eine lange, axial zur Aufnahme (25) verlaufende Gewindeschraube (29) und eine Scheibe (28) hat, deren Verschiebung entlang des Gewindes der Schraube (29) in Richtung der Scheibe (27) das elastische Teil (6) in eine konische Buchse (30) führt.

## Claims

1. Assembly means for connecting a vehicle chassis axle support of the type comprising an assembly axle (7) traversing a bifurcated support (2), and a resilient component (6) force-fitted in a housing (25) of a clamp (5) of the axle and traversed at its centre by the assembly axle, characterised in that:
- on the one hand, the resilient component (6) is formed from form-retaining material and has a central bore,
- on the other hand, the assembly axle (7) comprises at least two principal components with two compression portions (10), the diameter of which is greater than the internal diameter of the central bore in the resilient component (6), said compression portions being extended by two conical portions (11) orientated towards each other, the diameter of which decreases to a diameter which is, at the most, equal to the internal diameter of the bore in the resilient component (6).

2. Assembly means according to claim 1, characterised in that the assembly axle (7) comprises at least:
- a bolt (8) configured to have a cylindrical bearing portion (9) with a reduced diameter, a cylindrical compression portion (10) with an enlarged diameter, a conical connecting portion (11) between the two cylindrical portions (10 and 9), one end having a hexagonal head (13) and one end (12) being threaded,
- a clamping component (14) configured to have a cylindrical portion (10) with an enlarged diameter and a conical portion (11) terminated by a hexagonal nut (15), a longitudinal thread (17) accommodating the threaded end of the bolt, the thread (17) extending into a coaxial cylindrical housing which accommodates the cylindrical bearing portion (9) of the bolt (8).
- two securing washers (18, 19) on the flanges of the fork.

3. Assembly means according to claim 1, characterised in that the assembly axle (7) comprises at least:
- two identically-shaped hollow bolts (20), which are mounted symmetrically relative to the vertical and are supported on each other by their cylindrical end of reduced diameter (9), each hollow bolt (20) having a cylindrical portion (10) of enlarged diameter connected to the portion (9) by a cone (11) and ending in a hexagonal securing head (13 or 15),
- an assembly bolt (21) formed from a threaded spindle (22) and two securing nuts (23),
- two securing washers (18, 19).

4. Assembly means according to claim 1, characterised in that the assembly axle (7) comprises at least:
- two identically-shaped hollow bolts (22) which are differentiated from the hollow bolts (20) by the absence of a cylindrical supporting portion (9) of reduced diameter and by the presence of an annular shoulder (23),
- an assembly bolt (24) with two threaded ends (25) and a central cylindrical portion of identical diameter to that of the preceding portion (9) being supported laterally on the shoulders (23) of the two hollow bolts (22),
- two securing washers (18, 19).

5. Assembly means according to claim 1, characterised in that the assembly axle (7) comprises at least two components which are orientated towards each other, each component having a compression portion (10) and a conical portion (11), intended to deform a deformable tubular component (38) mounted between a securing bolt and the resilient component (6).

6. Assembly means according to one of the preceding claims, characterised in that one of the components (clamp, tie-rod, support) is in two parts.

7. Assembly means according to one of the preceding claims, characterised in that the resilient component (6) is enclosed between two washers (31).

8. Assembly means according to one of the preceding claims, characterised in that the resilient component is in a plurality of parts.

9. Assembly tool for fitting the resilient component (6) of the connecting means according to the main claim in its housing (25), characterised in that it comprises a support washer (27), a long threaded bolt (29) placed in the axis of the housing (25) and a washer (28), the displacement of which along the thread of the bolt (29) in the direction of the washer (27) entrains the resilient component (6) into a conical tube (30).
